Europäisches Patentamt

European Patent Office

Office européen des brevets

(11) Veröffentlichungsnummer: **0 170 292**
**A1**

(12) # EUROPÄISCHE PATENTANMELDUNG

(21) Anmeldenummer: **85109835.0**

(22) Anmeldetag: **05.08.85**

(51) Int. Cl.⁴: **H 02 M 3/338**

(30) Priorität: **07.08.84 DE 3429103**

(43) Veröffentlichungstag der Anmeldung:
**05.02.86 Patentblatt 86/6**

(84) Benannte Vertragsstaaten:
**CH DE FR GB IT LI NL SE**

(71) Anmelder: **Siemens Aktiengesellschaft
Berlin und München Wittelsbacherplatz 2
D-8000 München 2(DE)**

(72) Erfinder: **Stasch, Harald, Dipl.-Ing. (FH)
Ammerseestrasse 16
D-8027 Neuried(DE)**

(72) Erfinder: **Schierjott, Rudolf, Dipl.-Ing. (FH)
Edlingerplatz 4
D-8000 München 90(DE)**

(54) **Schaltnetzteil mit freischwingendem Durchflusswandler.**

(57) Die Erfindung betrifft ein Schaltnetzteil mit einer Gleichrichteranordnung (BG) zur Erzeugung einer Gleichspannung (UG) aus einer Eingangswechselspannung (UE), und mit einer einen Schalttransistor (T1) und einen Übertrager (Ü) aufweisenden Umrichteranordnung. Erfindungsgemäß ist die Umrichteranordnung ein freischwingender Durchflußumrichter, wobei der Schalttransistor (T1) im stromlosen Zustand eingeschaltet wird.

0170292

Siemens Aktiengesellschaft          Unser Zeichen
Berlin und München                  VPA 84 P 1576 E

Schaltnetzteil mit freischwingendem Durchflußwandler

Die Erfindung betrifft ein Schaltnetzteil gemäß dem
Oberbegriff des Patentanspruchs 1.

Schaltnetzteile werden heutzutage in großem Umfang zur
Stromversorgung verwendet, da sie gegenüber 50 Hz Netzteilen leichter und kleiner, sowie billiger herzustellen sind.

Allgemein bekannte Schaltnetzteile weisen einen Übertrager auf, dessen primärseitige Wicklung durch einen
Schalttransistor mit Energie geladen und an dessen sekundärseitiger Wicklung bzw. Wicklungen diese Energie in
Form einer oder mehrerer konstanter Spannungen entnommen
wird. Der Übertrager ist hierbei Bestandteil eines
Durchflußwandlers oder eines Sperrwandlers. Aufbau und
Wirkungsweise dieser Wandlertypen sind in dem Buch
"Schaltnetzteile " von Joachim Wüstehube, 1979,
Expert-Verlag, Kapitel 2.1 ausführlich beschrieben.

Schaltnetzteile arbeiten meistens in einem Frequenzbereich
von 16 bis 50 kHz. Da die auftretenden Strom- bzw. Spannungsverläufe große Überschwingungsanteile aufweisen, und
zudem hohe Ströme und Spannungen geschaltet werden müssen,
muß im Frequenzbereich oberhalb 150 kHz (Langwelle) noch
mit erheblichen Störungen gerechnet werden. Für den Frequenzgang dieser Störungen gibt es bindende Vorschriften,
soweit eine Ausbreitung in öffentlichen Netzen oder eine
Ausstrahlung in den offenen Raum möglich sind.

Kro 1 Ktz / 03.08.1984

**0170292**

Zur Unterdrückung von asymmetrischen Störspannungen im Netz weisen Übertrager in Schaltnetzteilen zwischen der primären und der sekundären Seite eine Schirmung auf. Die Schirmung besteht beispielsweise aus einer Kupferfolie, die isoliert über die Primärwicklung gelegt ist.

Sperrwandlernetzteile weisen einen Übertrager mit einem Luftspalt auf. Insbesondere bei hohen Leistungen entstehen in den Transformatorkernen der Übertrager und in der Schirmung hohe Wirbelstromverluste. Es ist deshalb allgemein üblich (siehe Wüstehube), statt der Kupferfolie zur Schirmung ein sog. Leitvlies zu verwenden. Die Herstellung eines solchen Übertragers für einen Sperrwandler ist daher aufwendig und teuer.

Die bekannten Durchflußwandler weisen im wesentlichen festtaktgesteuerte periodisch arbeitende Schalttransistoren, sowie einen Übertrager ohne Luftspalt auf, dessen Primärwicklung im Kollektorkreis des Schalttransistors liegt und an dessen Sekundärwicklung über eine Gleichrichter-Anordnung eine Gleichspannung abnehmbar ist. Da bei diesem Schaltprinzip mit einer vorgegebenen Schaltfrequenz gearbeitet wird, ist der Einschaltzeitpunkt des Schalttransistors vorbestimmt. Dieses Schaltprinzip weist den Nachteil auf, daß der Schalttransistor unter Strom eingeschaltet wird und eine Freilaufdiode im Sekundärkreis unter Strom in den gesperrten Zustand übergeht. Dies führt zu hohen Funkstörspannungen auf der Netzleitung. Wenn diese Umrichterschaltungen in Textendgeräten der Kommunikationstechnik mit galvanischer Trennung nach Schutzklasse 2, das heißt ohne Erdleiter eingesetzt werden, so können diese Geräte nicht auf den erforderlichen Funkstörpegel der Grenzwertklasse B entstört werden.

Es ist Aufgabe der Erfindung ein Schaltnetzteil mit galvanischer Trennung anzugeben, bei dem nur geringe Störimpulse auf den Anschlußleitungen auftreten und das einen
Übertrager mit geringen Wirbelstromverlusten aufweist.

Diese Aufgabe wird erfindungsgemäß durch die im kennzeichnenden Teil des Patentanspruchs 1 angegebenen
Merkmale gelöst.

Ein Vorteil des erfindungsgemäßen Schaltnetzteils liegt
darin, daß durch den dreieckförmigen Kollektorstrom der
Umrichter leicht entstörbar ist.

Dadurch, daß der Schalttransistor nicht unter Strom eingeschaltet wird, sind die Schaltverluste reduziert.

Dadurch, daß das erfindungsgemäße Schaltnetzteil einen
Durchflußumrichter aufweist, kann zur Schirmung der Primärwicklung des Übertragers eine einfach zu verarbeitende Metallfolie verwendet werden.

Im folgenden wird die Erfindung anhand eines in der
Zeichnung dargestellten Ausführungsbeispieles beschrieben.

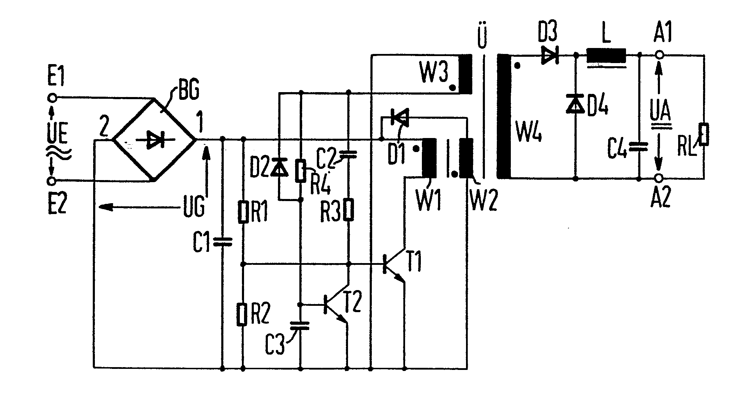

Das in der Zeichnung dargestellte Schaltnetzteil weist
einen Durchflußwandler mit zwei Eingangsklemmen E1, E2
auf, an denen eine Eingangswechselspannung UE anliegt.
Ein Brückengleichrichter BG wandelt diese Eingangswechselspannung UE in eine Gleichspannung UG um, und gibt
diese an zwei Klemmen 1,2 ab, wobei an der Klemme 1 ein
gegenüber der Klemme 2 positives Potential abgegeben
wird. Die Gleichspannung UG wird von einem zwischen die
Klemmen 1 und 2 geschalteten Kondensator C1 geglättet.
Zwischen die Klemmen 1 und 2 sind weiter eine Serienschaltung aus zwei Widerständen R1 und R2, und die Serienschaltung aus einer Primärwicklung W1 und der Kol-

lektoremitterstrecke eines Schalttransistors T1 geschaltet. Ein nicht näher bezeichneter Spannungsteilerpunkt zwischen den Widerständen R1 und R2 ist mit der Basis des Schalttransistors T1 verbunden.

Die Primärwicklung W1, eine Entmagnetisierungswicklung W2, eine Steuerwicklung W3 und eine Sekundärwicklung W4 sind Bestandteile eines Übertragers Ü. Die Primärwicklung W1 und die Sekundärwicklung W4 weisen jeweils den gleichen, die Steuerwicklung W3 und die Entmagnetisierungswicklung W2 den entgegengesetzten Wicklungssinn auf. Die Entmagnetisierungswicklung W2, ist in Serienschaltung mit einer Diode D1 zwischen die beiden Klemmen 1 und 2 geschaltet, wobei die Kathode der Diode D1 mit der Klemme 1 verbunden ist.

Zwischen die Basis des Schalttransistors T1 und die Klemme 2 ist die Kollektoremitterstrecke eines Steuertransistors T2 geschaltet. Die Basis des Steuertransistors T2 ist über einen Kondensator C3, und über die Serienschaltung aus einem Widerstand R4 und der Steuerwicklung W3 mit der Klemme 2 verbunden. Dem Widerstand R4 ist eine Diode D2 parallel geschaltet, deren Anode mit der Basis des Steuertransistors T2 verbunden ist. Die Kathode der Diode D2 ist über die Serienschaltung aus einem Kondensator C2 und einem Widerstand R3 mit der Basis des Schalttransistors T1 verbunden.

Der Widerstand R3 bildet zusammen mit dem Kondensator C2 eine Einschaltstufe, und der Kondensator C3 mit dem Widerstand R4 und dem Steuertransistor T2 sowie der Diode D2 eine Ausschaltstufe für den Schalttransistor T1.

Das eine Ende der Sekundärwicklung W4 ist über eine Gleichrichterdiode D3 und eine Induktivität L mit einer Ausgangsklemme A1 verbunden. Das andere Ende der Sekundärwicklung W4 ist direkt mit einer Ausgangsklemme A2 verbunden, die über eine in Flußrichtung gepolte Freilaufdiode D4 mit der Kathode der Gleichrichterdiode D3 verbunden ist. Zur Glättung einer an den Ausgangklemmen A1, A2 abgreifbaren Ausgangsgleichspannung UA ist zwischen diese ein Kondensator C4 geschaltet. Zwischen die Ausgangsklemmen A1 und A2 ist weiter ein Lastwiderstand RL geschaltet, der symbolisch einen externen Verbraucher darstellt.

Im folgenden wird die Wirkungsweise des erfindungsgemäßen Schaltnetzteils beschrieben.

Die gleichgerichtete Eingangswechselspannung UE, das heißt die Gleichspannung UG wird mit der Primärwicklung W1 des Übertragers Ü und dem Schalttransistor T1 in eine getaktete Spannung umgeformt. Beim Einschalten des Schaltnetzteils wird der Kondensator C2 über die Widerstände R1 und R3 und über die Steuerwicklung W3 aufgeladen. Wenn die Schwellwertspannung an der Basis des Schalttransistors T1 erreicht ist, wird dieser leitend geschaltet und der Durchflußwandler beginnt zu arbeiten.

Während der Leitendphase des Schalttransistors T1 wird Energie auf die Sekundärseite des Übertragers Ü übertragen. Zugleich ist die Gleichrichterdiode D3 leitend und die Freilaufdiode D4 gesperrt. Ein dabei durch die Induktivität L fließender Strom ermöglicht es an dem Kondensator C4 die Ausgangsgleichspannung UA abzunehmen. Während der Strom fließt, nimmt nicht nur der Lastwiderstand RL Energie auf, sondern auch die Induktivität L, die sie als magnetische Energie speichert. Der Spitzenwert des Stromes im Primärkreis ist durch die Induktivität L, durch die Summe der Verlustwiderstände im Primär- und Sekundärkreis, durch die Einschaltdauer des Schalttransistors T1, und durch den Wert der Ausgangsleichspannung UA bestimmt.

Ebenfalls während der Leitendphase des Schalttransistors T1 wird auf der Primärseite des Übertragers Ü der Kondensator C3 durch den in der Steuerwicklung W3 induzierten Strom über den Widerstand R4 aufgeladen. Nach Aufladung des Kondensator C3 auf die Schwellwertspannung der Basis des Steuertransistors T2, wird dieser impulsartig leitend geschaltet und der Schalttransistor T1 gesperrt. Die Einschaltdauer des Schalttransistors T1 ist also im wesentlichen durch die Zeitkonstante, gebildet aus dem Widerstand R4 und dem Kondensator C3 bestimmt. Während der Sperrphase des Schalttransistors T1 liegt an dessen Basis eine negative Spannung bezogen auf das an der Klemme 2 des Brückengleichrichters BG abgeifbare Potential. Diese Spannungsumkehr an der Basis des Schalttransistors T1 wird bewirkt durch die Umkehr der an der Steuerwicklung W3 abgreifbaren Spannung. Der Sperrvorgang im Schalttransistor wird über den Steuertransistor T2 eingeleitet, und über die Steuerwicklung W3 während der Entmagnetisierung aufrechtgehalten.

Während der Sperrphase des Schalttransistors T1 ist auf der Sekundärseite des Übertragers Ü die Gleichrichterdiode D3 in Rückwärtsrichtung gepolt und daher stromlos. Aufgrund der in der Induktivität L gespeicherten Energie fließt der Strom durch diese, den Lastwiderstand RL und die jetzt leitende Freilaufdiode D4 in gleicher Richtung weiter.

Die während der Leitendphase des Schalttransistors T1 vom Transformatorkern des Übertragers Ü aufgenommene Magnetisierungsenergie fließt während der Sperrphase des Schalttransistors T1 über die Entmagnetisierungswicklung W2 und die Diode D1 als elektrischer Strom in die Spannungsquelle, das heißt in den Kondensator C1 zurück. Nach der Entmagnetisierung des Übertragers Ü und im stromlosen Zustand der Freilaufdiode D4 wird der Schalttransistor T1 erneut

leitend geschaltet. Die während der Sperrphase des Schalttransistors T1 an dessen Basis anliegende negative Spannung ist nach der Entmagnetisierung abgebaut. Über den Widerstand R3 und die Steuerwicklung W3 wird der Kondensator C2 wieder aufgeladen und der Schalttransistor T1 erneut leitend geschaltet. Die Diode D2 dient zum schlagartigen Entladen des Kondensators C3 zu Beginn der Sperrphase des Schalttransistors T1.

Der dem erfindungsgemäßen Schaltnetzteiles zugrundeliegende Gedanke ist, daß der Einschaltzeitpunkt des Schalttransistors T1 und somit seine Schaltfrequenz nicht fest vorgegeben sind. Der Schalttransistor T1 wird nach der Entmagnetisierung des Übertragers Ü und im stromlosen Zutand der Freilaufdiode D4 selbständig wieder eingeschaltet. Dadurch ist sichergestellt, daß der Schalttransistor T1 nicht unter Strom eingeschaltet wird, und daß ein dreieckförmiger Kollektorstrom im Primärkreis fließt, der leicht entstörbar ist.

Im erfindungsgemäßen Schaltnetzteil wird der Schalttransistor T1 für eine vorgegebene Zeit leitend geschaltet. Nach dieser Einschaltdauer, d.h. während der Sperrphase des Schalttransistors T1 wird der Übertrager Ü entmagnetisiert. Nach der Entmagnetisierung und daher im stromlosen Zustand der Freilaufdiode D4 wird der Schalttransistor T1 erneut eingeschaltet. Das Ende der Entmagnetisierung wird dabei im wesentlichen über die Steuerwicklung W3 erkannt.

Als Schalttransistor T1 ist im erfindungsgemäßen Schaltnetzteil jedes steuerbare Halbleiterschaltelement verwendbar.

7 Patentansprüche
1 Figur

**0170292**

## Bezugszeichenliste

T1   Schalttransistor

T2   Steuertransistor

W1   Primärwicklung

W2   Entmagnetisierungswicklung

W3   Steuerwicklung

W4   Sekundärwicklung

Ü    Übertrager

BG   Brückengleichrichter

UE   Eingangswechselspannung

UA   Ausgangsgleichspannung

D1, D2   Dioden

D3   Gleichrichterdiode

D4   Freilaufdiode

L    Induktivität

RL   Lastwiderstand

E1, E2   Eingangsklemmen

A1, A2   Ausgangsklemmen

UG   Gleichspannung

C1 bis C4 Kondensatoren

R1 bis R4 Widerstände

**0170292**

Patentansprüche

1. Schaltnetzteil mit einer Gleichrichteranordnung (BG) zur Erzeugung einer Gleichspannung (UG) aus einer Eingangswechselspannung (UE), und mit einer einen Schalttransistor (T1) und einen Übertrager (Ü) aufweisenden Umrichteranordnung,
dadurch gekennzeichnet , daß die Umrichteranordnung als freischwingender Durchflußumrichter ausgebildet ist, wobei der Schalttransistor (T1) im stromlosen Zustand eingeschaltet wird.

2. Schaltnetzteil nach Anspruch 1,
dadurch gekennzeichnet , daß an der Basis des Schalttransistors (T1) ein Teil der Gleichspannung (UG) anliegt,
daß der Übertrager (Ü) eine Steuerwicklung (W3) aufweist,
daß eine Einschaltstufe und eine Ausschaltstufe zur Steuerung des Schalttransistors (T1) vorgesehen sind,
daß bei einem entmagnetisierten Übertrager (Ü) der Schalttransistor (T1) über die Einschaltstufe und über die Steuerwicklung (W3) leitend geschaltet wird, und nach einer vorgebbaren Einschaltdauer durch den in der Steuerwicklung (W3) induzierten Strom über die Ausschaltstufe gesperrt wird.

3. Schaltnetzteil nach Anspruch 1 oder 2,
dadurch gekennzeichnet , daß die Einschaltstufe aus einem Widerstand (R3) und einem Kondenstor (C2) in Serie besteht.

4. Schaltnetzteil nach einem der Ansprüche 1 bis 3,
dadurch gekennzeichnet , daß die Ausschaltstufe aus einem Steuertransistor (T2), einem Kondensator (C3) und einem Widerstand (R4) besteht, wobei
die Einschaltdauer durch den Widerstand (R4) und den Kondensator (C3) bestimmt ist.

5. Schaltnetzteil nach einem der Ansprüche 1 bis 4,
d a d u r c h  g e k e n n z e i c h n e t , daß dem
Widerstand (R4) eine Diode (D2) parallel geschaltet ist,
die zu Beginn der Entmagnetisierung des Übertragers (Ü)
den Kondensator (C3) schlagartig entlädt.

6. Schaltnetzteil nach einem der Ansprüche 1 bis 4,
d a d u r c h  g e k e n n z e i c h n e t , daß die
Umrichteranordnung sekundärseitig eine Gleichrichterdiode (D3), eine Freilaufdiode (D4), und einen Kondensator (C4) aufweist, wobei der Kondensator (C4) zur
Glättung einer an ihm abgreifbaren Ausgangsgleichspannung
(UA), und die beiden Dioden (D3, D4) zur Erzeugung bzw.
Aufrechterhaltung der Ausgangsgleichspannung (UA) dienen.

7. Schaltnetzteil nach Anspruch 6,
d a d u r c h  g e k e n n z e i c h n e t , daß sekundärseitig eine dem Kondensator (C4) vorgeschaltete Induktivität (L) vorgesehen ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | GB-A-2 069 256 (M. FARRER) * Seite 1, Zeilen 31-44; Seite 2, Zeilen 27-48 * | 1,6,7 | H 02 M 3/338 |
| A | ELEKTRONIK, Band 29, Nr. 6, März 1980, Seiten 92-96, München, DE; R.J. BOSCHERT et al.: "Schaltnetzteile nach dem Flyback-Verfahren" * Seite 93, rechte Spalte; Bild 2C; Seite 94, rechte Spalte, unten * | 1,6,7 | |
| A | WO-A-8 203 302 (VINCIARELLI) * Seite 3, Zeile 5 - Seite 4, Zeile 31 * | 1 | |

RECHERCHIERTE SACHGEBIETE (Int Cl 4)

H 02 M

Der vorliegende Recherchenbericht wurde für alle Patentansprüche erstellt.

| Recherchenort | Abschlußdatum der Recherche | Prüfer |
|---|---|---|
| DEN HAAG | 04-11-1985 | KERN H. |